# EUROPEAN PATENT APPLICATION

(11) **EP 4 471 178 A1**
(43) Date of publication of application: **04.12.2024**
(21) Application number: 23747010.9
(22) Date of filing: 26.01.2023
(51) Int. Cl.: C23C 22/00, C21D 9/46, C22C 38/00, C22C 38/06, H01F 1/147

(54) **NON-ORIENTED ELECTROMAGNETIC STEEL SHEET**

(30) Priority: 26.01.2022 JP 2022009801
(71) Applicant: NIPPON STEEL CORPORATION, Chiyoda-ku Tokyo 100-8071 (JP)
(72) Inventor: TAKEDA, Kazutoshi, Tokyo 100-8071 (JP); NATORI, Yoshiaki, Tokyo 100-8071 (JP); TAKATANI, Shinsuke, Tokyo 100-8071 (JP); FUKUCHI, Minako, Tokyo 100-8071 (JP)
(74) Representative: Vossius & Partner Patentanwälte Rechtsanwälte mbB
(86) International application number: PCT/JP2023/002375
(87) International publication number: WO 2023/145800

(57) **Abstract**

A non-oriented electromagnetic steel sheet (1) according to one embodiment of the present invention is provided with a base metal steel sheet (10) and an insulating coating film (20) that is formed on the surface of the base metal steel sheet (10). The insulating coating film (20) contains a metal phosphate (201), and 5 to 35 parts by mass of an organic resin (202) per 100 parts by mass of the metal phosphate (201). The organic resin (202) contains 5 parts by mass or more of an amino resin per 100 parts by mass of the metal phosphate (201).

## Description

### TECHNICAL FIELD

The present invention relates to a non-oriented electrical steel sheet.

### BACKGROUND

A non-oriented electrical steel sheet is used in iron cores (motor cores (rotor cores and stator cores)) for motors for driving small home appliances such as audio equipment, and motors for driving hybrid cars and electric vehicles.

An insulating coating film is formed on a surface of the non-oriented electrical steel sheet. The insulating coating film ensures insulation, for example, between electrical steel sheets stacked as a stator core. In other words, the insulating coating film is required to have excellent insulation properties. The insulating coating film is also required to adhere to the steel sheet and resist corrosion.

Insulating coating films for electrical steel sheets with excellent insulation, adhesion, and corrosion resistance are proposed in, for example, WO 2016/136515 (Patent Document 1), JP2017-141480 A (Patent Document 2), and JP2015-509994 A (Patent Document 3).

The electrical steel sheet disclosed in Patent Document 1 has an insulating coating film on a surface of the steel sheet. The insulating coating film includes a binder composed of 100 parts by mass of a metal phosphate and 1 to 50 parts by mass of an organic resin having an average particle diameter of 0.05 to 0.50 µm, and a carboxylic acid compound having a carbon number of 2 to 50, the content of which is 0.1 to 10.0 parts by mass per 100 parts by mass of the solid content of the binder. The organic resin is one or more types selected from an acrylic resin, an epoxy resin, and a polyester resin. Patent Document 1 states that it provides an electrical steel sheet with an insulating coating film having good adhesion, corrosion resistance, appearance, and edge corrosion resistance after punching, in addition to insulation properties, even without chromium compounds.

The electrical steel sheet disclosed in Patent Document 2 has on its surface an insulating coating film consisting of 100 parts by mass of a metal phosphate as a main component, 1 to 50 parts by mass of an acrylic resin having an average particle diameter of 0.05 to 0.50 µm and utilizing a reactive emulsifier, and 0.5 to 10 parts by mass of a polyhydric alcohol. The metal element of the metal phosphate is at least a mixture of divalent metal elements and trivalent metal elements; the mixing ratio of the divalent metal elements is 30 to 80 mass% of the total mass of the metal elements of the metal phosphate. This results in an electrical steel sheet which retains an insulating coating with good uniformity, no insulation problems and excellent adhesion to resin during electrodeposition painting/molding, according to Patent Document 2.

The non-oriented electrical steel sheet disclosed in Document 3 has an insulating coating film layer. The insulating coating film layer is characterized in that the coating layer is formed by applying an insulating coating film composition containing a mixed metal phosphate consisting of aluminum phosphate (Al(H₃PO₄) _{x = 1 to 3}) and cobalt phosphate (Co(H₃PO₄)₃); and an organic/inorganic composite consisting of epoxy resin and silica (SiO₂) nanoparticle substituted on the functional group of the epoxy resin, and then drying to form the coating. This results in a non-oriented electrical steel sheet with much better insulation properties before/after stress relief annealing (SRA) than existing thin coating products, according to the Patent Document 3.

### LIST OF PRIOR ART DOCUMENTS

### PATENT DOCUMENT

Patent Document 1: WO 2016/136515
Patent Document 2: JP2017-141480 A
Patent Document 3: JP2015-509994 A

### SUMMARY OF INVENTION

### TECHNICAL PROBLEM

By the way, the manufacturing method of the stator core using a non-oriented electrical steel sheet is as follows. Non-oriented electrical steel sheets are punched into a predetermined shape. After punching, the steel sheets (core blanks) are stacked and bonded to form a laminate core. Coils are placed in the slots of the stator core. During the punching process, the punched non-oriented electrical steel sheets are subjected to processing strain, which deteriorates their magnetic properties. Therefore, stress relief annealing is sometimes performed to remove the processing strain. The stress relief annealing process is performed at a high temperature of 700°C or more. The insulating coating film heated during stress relief annealing may produce decomposition products due to heating.

As mentioned above, excellent adhesion is required for the insulating coating film of the non-oriented electrical steel sheet, even after stress relief annealing. If the adhesion of the insulating coating film is poor, the coating fragments that peel off from the steel sheet will enter between the stator core and the rotor core, and interfere with the rotation of the stator core and the rotor core. In some cases, the rotor core may be damaged.

The insulating coating film of the non-oriented electrical steel sheet is also required to have excellent corrosion resistance even after stress relief annealing. However, if excessive thermal decomposition, sublimation or powdering of the insulating coating film occurs due to heating in the stress relief annealing process, the corrosion resistance may deteriorate.

An objective of the present invention is to provide a non-oriented electrical steel sheet with an insulating coating film having excellent adhesion and corrosion resistance after stress relief annealing.

### SOLUTION TO PROBLEM

The non-oriented electrical steel sheet according to the present invention includes:
a base metal steel sheet, and an insulating coating film formed on a surface of the base metal steel sheet,
wherein the insulating coating film contains a metal phosphate, and an organic resin in a ratio of 5 to 35 parts by mass per 100 parts by mass of the metal phosphate,
wherein the organic resin contains an amino resin in a ratio of 5 parts by mass or more per 100 parts by mass of the metal phosphate.

### ADVANTAGEOUS EFFECT OF INVENTION

The non-oriented electrical steel sheet of the present invention has excellent adhesion and corrosion resistance of the insulating coating film after stress relief annealing.

### BRIEF DESCRIPTION OF DRAWINGS

[Figure 1] Figure 1 is a cross-sectional view of the non-oriented electrical steel sheet of the present embodiment in the thickness direction.
[Figure 2] Figure 2 is an enlarged cross-sectional view of the insulating coating film in Figure 1.

### DESCRIPTION OF EMBODIMENTS

The present inventors investigated and studied the adhesion and corrosion resistance of the insulating coating film on the non-oriented electrical steel sheet after stress relief annealing.

The above Patent Documents 1 and 2 state that an insulating coating film containing a metal phosphate and an organic resin has excellent adhesion. Therefore, the present inventors investigated means to further improve the adhesion and corrosion resistance of the insulating coating film containing a metal phosphate and an organic resin.

The insulating coating film on the non-oriented electrical steel sheet is manufactured as follows. A surface treatment agent containing a metal phosphate and an organic resin is applied to the base metal steel sheet. Then, the base metal steel sheet coated with the surface treatment agent is heated to form an insulating coating film.

The present inventors considered that the adhesion of the insulating coating film after stress relief annealing could be improved if the insulating coating film contained an amino resin which has excellent heat resistance. As a result of the present inventors' study, it has been found that if the insulating coating film contains 5 parts by mass or more of an amino resin per 100 parts by mass of the metal phosphate, the adhesion and corrosion resistance after stress relief annealing are improved. However, it has also been found that the amino resin reacts with the metal phosphate contained in the surface treatment agent, thereby reducing the stability of the surface treatment agent. When the stability of the surface treatment agent is low, the adhesion of the insulating coating film formed will be reduced.

Therefore, the present inventors investigated means for suppressing the reaction between the metal phosphate and the amino resin contained in the surface treatment agent in order to improve the stability of the surface treatment agent. As a result, it has been found that the stability of the surface treatment agent can be increased if the total content of organic resin containing 5 parts by mass or more of amino resin is limited to 35 parts by mass or less per 100 parts by mass of the metal phosphate. By increasing the stability of the surface treatment agent, peeling after stress relief annealing can be suppressed, and a highly adherent insulating coating film can be formed.

The non-oriented electrical steel sheet of the present embodiment has been completed based on the technical concept described above, and the gist of the invention is as follows.

(1) A non-oriented electrical steel sheet including:
   a base metal steel sheet and an insulating coating film formed on a surface of the base metal steel sheet,
   wherein the insulating coating film contains a metal phosphate and 5 to 35 parts by mass of an organic resin per 100 parts by mass of the metal phosphate,
   wherein the organic resin contains 5 parts by mass or more of an amino resin per 100 parts by mass of the metal phosphate.
(2) The non-oriented electrical steel sheet described in (1) above,
   wherein the organic resin further contains one or more types selected from an acrylic resin and a polyester resin.
(3) The non-oriented electrical steel sheet described in (2) above,
   wherein the organic resin contains 5 to 30 parts by mass of the amino resin per 100 parts by mass of the metal phosphate, and one or more types selected from an acrylic resin and a polyester resin in a total of 1 to 25 parts by mass per 100 parts by mass of the metal phosphate.
(4) The non-oriented electrical steel sheet described in any one of (1) to (3) above,
   wherein the metal phosphate is one or more types selected from Zn phosphate, Mn phosphate, Al phosphate, and Mo phosphate.
(5) The non-oriented electrical steel sheet described in any one of (1) to (4) above,
   wherein the amino resin is one or more types selected from a melamine resin and a benzoguanamine resin.
(6) The non-oriented electrical steel sheet described in any one of (1) to (5) above,
   wherein the base metal steel sheet contains, by mass %,
   Si: 2.5 to 4.5%,
   Al: 0.1 to 1.5%, and
   Mn: 0.2 to 4.0%.

The non-oriented electrical steel sheet according to the present embodiment is described in detail below.

### [Configuration of Non-oriented Electrical Steel Sheet]

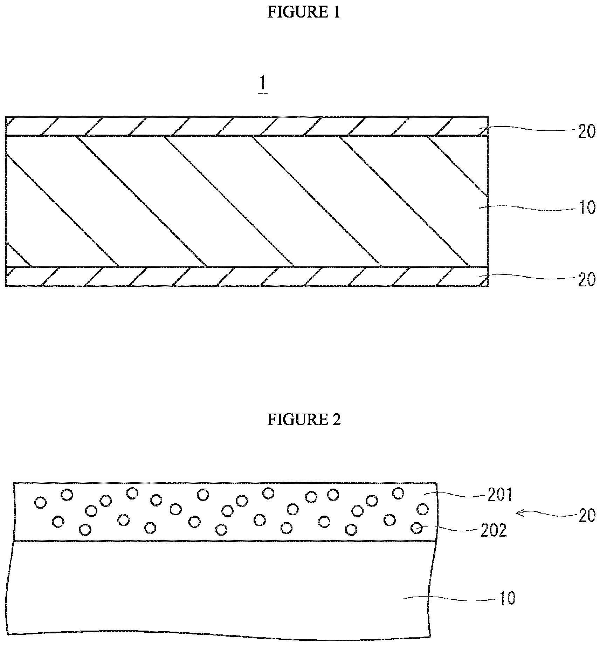

Figure 1 shows a cross-sectional view of the non-oriented electrical steel sheet of the present embodiment in the direction of the sheet thickness. Referring to Figure 1, the non-oriented electrical steel sheet 1 includes a base metal steel sheet 10 and an insulating coating film 20. The insulating coating film 20 is formed on a surface of the base metal steel sheet 10. In Figure 1, the insulating coating film 20 is formed on the upper and lower surfaces of the base metal steel sheet 10, respectively. However, the insulating coating film 20 may be formed on only one of the surfaces of the base metal steel sheet 10. The base metal steel sheet 10 and insulating coating film 20 are described below.

### [Base Metal Steel Sheet 10]

The base metal steel sheet 10 can be selected from known steel sheets used as a non-oriented electrical steel sheet 1. That is, the base steel sheet 10 is not particularly limited as long as it is a known steel sheet for use as a non-oriented electrical steel sheet 1. Note that it is possible to determine whether the steel sheet is a grain-oriented electrical steel sheet or a non-oriented electrical steel sheet 1 by measuring the magnetic flux density of the steel sheet. The magnetic flux density can be measured by a well-known Tesla meter.

The chemical composition of the base metal steel sheet 10 contains basic elements, optional elements as required, and the balance being Fe and impurities. The chemical composition of the base metal steel sheet 10 contains, for example, the following elements. Hereinafter, unless otherwise stated, "%" means mass percent.

### [Basic Elements]

The chemical composition of the base metal steel sheet 10 contains Si, Al, and Mn as basic elements. These elements are described below.

### Si: 2.5 to 4.5%

Silicon (Si) increases the electrical resistance of steel and reduces the eddy current losses. As a result, the iron loss of the steel sheet is reduced. Si also increases the strength of steel. If the Si content is less than 2.5%, the above effects are not sufficient. On the other hand, if the Si content exceeds 4.5%, the workability of the steel decreases. Therefore, the Si content is 2.5 to 4.5%. A preferred lower limit of Si content is 2.6% and more preferably 2.7%. A preferred upper limit of Si content is 4.3% and more preferably 4.2%.

### Al: 0.1 to 1.5%

Aluminum (Al) increases the electrical resistance of steel and reduces the eddy current losses. As a result, the iron loss of the steel sheet is reduced. If the Al content is less than 0.1%, the above effects are not sufficient. On the other hand, if the Al content exceeds 1.5%, the saturation magnetic flux density decreases. Therefore, the Al content is 0.1 to 1.5%. A preferred lower limit of Al content is 0.15% and more preferably 0.2%. A preferred upper limit of Al content is 1.4% and more preferably 1.3%.

### Mn: 0.2 to 4.0%

Manganese (Mn) increases the electrical resistance of steel and reduces the eddy current losses. As a result, the iron loss of the steel sheet is reduced. Mn also suppresses the formation of {111 }<112> texture, which is undesirable for magnetic properties. If the Mn content is less than 0.2%, the above effects are not fully realized. On the other hand, if the Mn content exceeds 4.0%, the texture varies and the hysteresis loss tends to worsen. Therefore, the Mn content is 0.2 to 4.0%. A preferred lower limit of Mn content is 0.3% and more preferably 0.4%. A preferred upper limit of Mn content is 3.8% and more preferably 3.6%.

In the present embodiment, the chemical composition of the base metal steel sheet 10 contains impurities. Here, the term "impurities" means elements that are mixed in as raw materials from ores or scrap, or from the manufacturing environment, etc., when the base metal steel sheet 10 is manufactured industrially. For example, impurities are elements such as C, P, S, N, etc.

The chemical composition of the base metal steel sheet 10 can be measured by known chemical analysis methods. For example, the chemical composition of the base metal steel sheet 10 can be measured using ICP-AES (Inductively Coupled Plasma-Atomic Emission Spectrometry).

### [Insulating coating film 20]

The insulating coating film 20 is formed on the surface of the base steel sheet 10 as described above. After being processed into core blanks, the non-oriented electrical steel sheets 1 are stacked to form a motor core. The insulating coating film 20 reduces the eddy current between the steel sheets (between the core blanks) after stacking. As a result, the eddy current loss in the motor core can be reduced.

Figure 2 is an enlarged cross-sectional view of the insulating coating film 20 in Figure 1. Referring to Figure 2, the insulating coating film 20 contains a metal phosphate 201 and an organic resin 202. The insulating coating film 20 does not contain chromium oxide. The metal phosphate 201 and the organic resin 202 will be described below.

### [Metal phosphate 201]

The metal phosphate 201 functions as a binder for the insulating coating film 20. The metal phosphate is a solid content obtained by drying an aqueous solution (insulating coating solution) containing phosphoric acid and a metal ion. The type of phosphoric acid is not limited, and any known phosphoric acid can be used. Preferred phosphoric acids are one or more selected from the group consisting of orthophosphoric acid, metaphosphoric acid, and polyphosphoric acid.

The metal ion acts on the corrosion resistance and adhesion of the insulating coating film 20. The types of metal ions are not limited. For example, the metal ion is one or more selected from the group consisting of Li, Al, Zn, Mg, Ca, Sr, Ti, Co, Mn, and Ni.

Preferably, the metal phosphate 201 contains one or more selected from the group consisting of Zn phosphate, Mn phosphate, Al phosphate, and Mo phosphate. Zn phosphate effectively increases the corrosion resistance of the insulating coating film 20. Mn phosphate enhances the heat resistance of the insulating coating film 20. Al phosphate enhances the adhesion of the insulating coating film 20 to the base metal steel sheet 10 and also enhances the heat resistance of the insulating coating film 20. Mo phosphate enhances the heat resistance of the insulating coating film 20.

### [Metal phosphate content]

There is no particular restriction on the content of the metal phosphate 201. Preferably, the content of the metal phosphate 201 in the insulating coating film 20 is 50% or more by mass. If the content of the metal phosphate 201 is 50% or more, its function as a binder can be sufficiently secured. The content of the metal phosphate 201 is more preferably 60% or more. The substantial upper limit of the content of the metal phosphate 201 is 95%.

The content of phosphorus in the insulating coating 20 is preferably 35% by mass or more in terms of H₂PO₄, more preferably 40% or more, even more preferably 45% or more, and even more preferably 50% or more.

The content of the metal phosphate 201 and phosphorus can be determined by measuring the content of P and metal elements by scanning electron microscopy-energy dispersive X-ray analysis (SEM-EDS). P is converted into H₂PO₄ phosphoric acid and its content is calculated. The content of the metal phosphate, which is considered as M(H₂PO₄)ₓ (where M is the metal element, x is the valence of the metal element), is to be calculated from the calculated contents of metal elements and phosphoric acid.

### [Organic Resin 202]

Referring to Figure 2, the organic resin 202 is dispersed and contained in the metal phosphate 201 which acts as a binder. The organic resin 202 prevents coarse growth of the metal phosphate 201 and promotes polycrystallization of the metal phosphate 201, resulting in a dense insulating coating film 20.

### [Amino Resin]

The organic resin 202 includes an amino resin. The term "amino resin" is a generic term for resins obtained from a reaction of a compound having an amino group and an aldehyde compound. The amino resin is, for example, one or more types selected from the group consisting of a melamine resin and a benzoguanamine resin. The melamine resin includes, for example, one or more types selected from the group consisting of an alkyl etherified melamine resin such as a methyl etherified melamine resin, an ethyl etherified melamine resin, a propyl etherified melamine resin, an isopropyl etherified melamine resin, a butyl etherified melamine resin and a dibutoxymethyl trimethyl etherified melamine resin, an alkylated melamine resin such as a methylated melamine resin, an ethylated melamine resin, a propylated melamine resin, an isopropylated melamine resin and a butylated melamine resin, and a phenol-modified melamine resin.

### [Content of Organic Resin 202]

The content of the organic resin 202 in the insulating coating film 20 is 5 to 35 parts by mass per 100 parts by mass of the metal phosphate 201. The organic resin 202 contains 5 parts by mass or more of an amino resin per 100 parts by mass of the metal phosphate 201. That is, the content of the amino resin in the insulating coating film 20 is 5 parts by mass or more per 100 parts by mass of the metal phosphate. The amino resin has high heat resistance. When the organic resin 202 containing the amino resin is included in the insulating coating film 20, the adhesion and corrosion resistance of the insulating coating film 20 after stress relief annealing are enhanced. This effect cannot be achieved if the content of the amino resin is less than 5 parts by mass per 100 parts by mass of the metal phosphate 201.

On the other hand, if the content of the amino resin exceeds 35 parts by mass per 100 parts by mass of the metal phosphate 201, the metal phosphate 201 and the amino resin in the surface treatment agent react, thereby reducing the stability of the surface treatment agent. As a result, the adhesion and corrosion resistance of the resulting insulating coating film 20 after stress relief annealing are reduced. If the organic resin 202 contains other organic resins 202 described below in addition to the amino resin, and the content of the organic resin 202 exceeds 35 parts by mass per 100 parts by mass of the metal phosphate 201, the insulating coating film 20 may not be formed stably. This is because the amino resin greatly affects the stability of the organic resin 202 as a whole. Therefore, the content of the organic resin 202 is 5 to 35 parts by mass per 100 parts by mass of the metal phosphate 201.

The content of the organic resin 202 is preferably 6 parts by mass or more, more preferably 8 parts by mass or more, even more preferably more than 8 parts by mass, even more preferably 9 parts by mass or more, even more preferably 10 parts by mass or more, even more preferably 15 parts by mass or more, and even more preferably 20 parts by mass or more, per 100 parts by mass of the metal phosphate 201. The content of the organic resin 202 is preferably 33 parts by mass or less, more preferably 30 parts by mass or less, even more preferably 28 parts by mass or less, even more preferably 25 parts by mass or less, even more preferably less than 25 parts by mass, even more preferably 20 parts by mass or less, per 100 parts by mass of the metal phosphate 201.The content of the organic resin 202 is the total content of organic resins 202 contained in the insulating coating film 20. In the present description, the content of the organic resin 202 means the total content of amino resins, and acrylic resins, polyester resins, and other resins, which will be described below.

### [Preferred Content of Amino Resin]

The preferred content of the amino resin is 5 to 30 parts by mass per 100 parts by mass of the metal phosphate 201. The content of the amino resin is more preferably 6 parts by mass or more, even more preferably 8 parts by mass or more, even more preferably more than 8 parts by mass, and even more preferably 10 parts by mass or more, per 100 parts by mass of the metal phosphate 201. The content of the amino resin is more preferably 28 parts by mass or less, even more preferably 25 parts by mass or less, even more preferably less than 25 parts by mass, even more preferably 20 parts by mass or less, and even more preferably 15 parts by mass or less, per 100 parts by mass of the metal phosphate 201.

The ratio of the content of the amino resin to the content of the organic resin 202 is not particularly limited. However, considering the upper limit of the total content of organic resins 202 and the lower limit of the amino resin content, the practical lower limit of the ratio of the content of the amino resin to the content of the organic resin 202 is 14%. When the ratio of the content of the amino resin to the content of the organic resin 202 is 15% or more, the content of the amino resin is sufficiently ensured. As a result, the adhesion and corrosion resistance of the insulating coating film 20 after stress relief annealing are further increased in a more stable manner. Therefore, preferably, the ratio of the content of the amino resin to the content of the organic resin 202 is 15% or more. The lower limit of the ratio of the content of the amino resin to the content of the organic resin 202 is more preferably 20%, even more preferably 25%, and even more preferably 30%.

The upper limit of the ratio of the content of the amino resin to the content of the organic resin 202 may be 100%. However, as described below, the adhesion is further improved by including an acrylic resin and/or a polyester resin in addition to the amino resin. Therefore, the upper limit of the ratio of the content of the amino resin to the content of the organic resin 202 is preferably 98%, more preferably 90%, and even more preferably 85%. The ratio of the content of the amino resin to the content of the organic resin 202 is obtained by dividing the content of the amino resin by the content of the organic resin 202. As mentioned above, the content of the organic resin 202 means the total content of amino resins, and acrylic resins, polyester resins and other resins as described below.

### [Acrylic Resin and Polyester Resin]

Preferably, the organic resin 202 further contains one or more types selected from the group consisting of an acrylic resin and a polyester resin. By the organic resin 202 containing one or more types selected from the group consisting of an acrylic resin and a polyester resin, elution of phosphoric acid from the insulating coating film 20 before stress relief annealing can be suppressed. As a result, the adhesion and corrosion resistance after stress relief annealing can be further improved.

This is considered to be because the insulating coating film 20 is made tougher by containing an acrylic resin and/or a polyester resin in addition to a hard amino resin. Moreover, the amino resin is a thermosetting resin, whereas the acrylic resin and the polyester resin are thermoplastic resins. Therefore, there is a difference in the behavior in the metal phosphate at elevated temperatures between the two. That is, the incorporation of thermosetting resin suppresses the sublimation of the resin and the formation of voids in the coating, thereby improving the corrosion resistance. In addition, the incorporation of thermoplastic resin also sufficiently suppresses the powdering of the resin and further improves the adhesion.

It should be noted that when a plurality of types of organic resins 202 are included in the treatment agent, the stability of the treatment agent deteriorates, so it is common to use only one type of organic resin 202. However, the inventors' study has found the above remarkable effect of the combined inclusion of amino resin and acrylic resin and/or polyester resin.

### [Preferred Content of Acrylic Resin and Polyester Resin]

Even if the content of one or more types selected from the group consisting of an acrylic resin and a polyester resin is small, the effect of suppressing the elution of phosphoric acid before stress relief annealing can be obtained. Meanwhile, in order to further improve the adhesion of the insulating coating film 20 after stress relief annealing, it is preferable for the content of one or more types selected from the group consisting of an acrylic resin and a polyester resin to be 1 part by mass or more per 100 parts by mass of the metal phosphate.

On the other hand, when the content of one or more types selected from the group consisting of an acrylic resin and a polyester resin is 25 parts by mass or less per 100 parts by mass of the metal phosphate, the content of the amino resin is sufficient. Thereby, the adhesion and corrosion resistance of the insulating coating film 20 after stress relief annealing are stably increased. Therefore, the content of one or more types selected from the group consisting of an acrylic resin and a polyester resin is preferably 1 to 25 parts by mass per 100 parts by mass of the metal phosphate. The lower limit of the content of one or more types selected from the group consisting of an acrylic resin and a polyester resin is more preferably 3 parts by mass, even more preferably 5 parts by mass, even more preferably 8 parts by mass, and even more preferably 10 parts by mass, per 100 parts by mass of the metal phosphate 201. The upper limit of the content of one or more types selected from the group consisting of an acrylic resin and a polyester resin is more preferably 23 parts by mass, even more preferably 20 parts by mass, even more preferably 18 parts by mass, and even more preferably 15 parts by mass, per 100 parts by mass of the metal phosphate 201. The content of one or more types selected from the group consisting of an acrylic resin and a polyester resin is the total content of the acrylic resin and the polyester resin.

### [Other Resins]

The organic resin 202 may contain other resins. The other resins include, for example, one or more types selected from the group consisting of a polystyrene resin, a vinyl acetate resin, an epoxy resin, a polyurethane resin, a polyamide resin, a phenol resin, a silicone resin, a polypropylene resin, and a polyethylene resin.

Epoxy resin, in particular, has excellent insulation properties and corrosion resistance. The type of epoxy resin is not particularly limited. For example, the epoxy resin is one or more types selected from the group consisting of a bisphenol A, F, and B type, an alicyclic type, a glycidyl ether type, a glycidyl ester type, a biphenyl type, a naphthalene type, a phenolic novolac type, an orthocresol novolac type a tetraphenylol ethane type, and a tris(hydroxyphenyl) methane type.

### [Preferred Content of Other Resins]

Preferably, the content of the other resins, i.e., resins other than amino resin, acrylic resin, and polyester resin, is 0 to 10 parts by mass per 100 parts by mass of the metal phosphate 201. The lower limit of the content of the other resins is preferably 0.5 parts by mass, and even more preferably 1 part by mass, per 100 parts by mass of the metal phosphate 201. The upper limit of the content of the other resins is more preferably 9 parts by mass, more preferably 8 parts by mass, more preferably 7 parts by mass, and even more preferably 6 parts by mass, per 100 parts by mass of the metal phosphate 201. The content of the other resins is the total content of the other resins.

### [Method of Identifying Metal phosphate 201 and Organic Resin 202 in Insulating coating film 20]

The metal phosphate 201 and the organic resin 202 in the insulating coating film 20 can be identified by the following method. The presence or absence of the organic resin 202 and the type of the organic resin 202 are identified by analyzing the gas generation behavior when the non-oriented electrical steel sheet 1 on which the insulating coating film 20 is formed is heated using the pyrolysis-gas chromatograph/mass spectrometry (Py-GC/MS) method (hereinafter referred to as the GC/MS method). The aforementioned GC/MS method and Fourier transform infrared spectroscopy (hereinafter referred to as the FT-IR method) may be used in combination to identify the organic resin 202.

Furthermore, chemical analysis using SEM-EDS or ICP-AES is performed on the insulating coating film 20, and when P and metal elements (Zn, Al, etc.) are detected, it is determined that the insulating coating film 20 contains the metal phosphate 201.

### [Methods of Determining Content of Organic Resin 202]

The content of the organic resin 202 can be identified by the following method. First, the carbon content of the organic resin 202 is calculated from the chemical structure of the organic resin 202 identified by the GC/MS and/or FT-IR methods described above. Next, the surface of the insulating coating film 20 is measured using SEM-EDS. The measurement points are a plurality of randomly selected locations on the surface of the insulating coating film 20. The concentration of carbon (C) is determined by elemental analysis. The arithmetic mean of the carbon concentration at a plurality of measurement points is considered to be the carbon concentration of the insulating coating film 20. In addition to the organic resin 202, the coating may include, for example, water-soluble organic compounds and the like, as described below. In such cases, the carbon concentration of the organic resin 202 in the insulating coating film 20 is determined based on the ratio of the carbon content derived from the organic resin and that from the water-soluble organic compound by the GC/MS method. In the following description, the carbon concentration of the insulating coating film 20 is to mean the carbon concentration of the organic resin 202 in the insulating coating film 20.

Then, the weight of the insulating coating film 20 peeled off from the base steel sheet 10 using an alkali solution is determined. From the weight of the insulating coating film 20 and the carbon concentration of the insulating coating film 20, the absolute value of the carbon amount in the insulating coating film 20 is calculated. From the absolute value of the carbon amount in the insulating coating film 20 and the carbon content of the organic resin 202, the content of the organic resin 202 in the insulating coating film 20 can be calculated. When a plurality of types of organic resins 202 are included, the ratio of the content of each organic resin (mass ratio) can be determined by the GC/MS method and/or the FT-IR methods described above. Thereby, the contents of amino resin, acrylic resin, polyester resin, and the other resins can be measured respectively.

Then, by comparing the measured contents of the organic resins with the content of the metal phosphate measured by the method described above, the parts by mass of each organic resin to 100 parts by mass of the metal phosphate is obtained.

### [Other Components]

The insulating coating film 20 may contain other components in addition to the metal phosphate 201 and the organic resin 202. The other components include, for example, a water-soluble organic compound. The water-soluble organic compound is, for example, one or more selected from the group consisting of a surfactant, an emulsifier, a defoamer, and a leveling agent. The content of the other components is 5.0 parts by mass or less per 100 parts by mass of the metal phosphate 201. The upper limit of the content of the other components is preferably less than 5.0 parts by mass, more preferably 4.5 parts by mass, even more preferably 4.0 parts by mass, even more preferably 3.5 parts by mass, and even more preferably 3.0 parts by mass, per 100 parts by mass of the metal phosphate 201.

The lower limit of the content of the other components may be 0%. The lower limit of the content of the other components is, for example, 0.1%. The content of boric acid in the insulating coating film 20 is less than 1 part by mass per 100 parts by mass of the metal phosphate 201. The content of boric acid in the insulating coating film 20 may be 0 parts by mass. The content of colloidal silica in the insulating coating film 20 is less than 1 part by mass per 100 parts by mass of the metal phosphate 201. The content of colloidal silica in the insulating coating film 20 may be 0 parts by mass. This is because excessive content of boric acid or colloidal silica may impair the adhesion and corrosion resistance.

Note that the content of the water-soluble organic compounds described above can be determined based on the carbon concentration measured by SEM-EDS as described above and the ratio of the content of carbon derived from organic resin and that from water-soluble organic compounds measured by the GC/MS method. In addition, the content of boric acid is measured by ICP-AES, and the content of colloidal silica is measured by SEM-EDS.

### [Preferred Thickness of Insulating coating film 20]

The thickness of the insulating coating film 20 is not particularly limited. A preferred thickness of the insulating coating film 20 is 0.20 to 1.60 µm. When the coating thickness is 0.20 to 1.60 µm, the insulating coating film 20 exhibits even better insulation properties. However, even if the thickness of the insulating coating film 20 is other than 0.20 to 1.60 µm, the insulating coating film 20 exhibits excellent adhesion and corrosion resistance after stress relief annealing.

As described above, the non-oriented electrical steel sheet 1 of the present embodiment has a base steel sheet 10 and an insulating coating film 20 formed on the surface of the base steel sheet 10. The insulating coating film 20 contains a metal phosphate 201 and 5 to 35 parts by mass of an organic resin 202 per 100 parts by mass of the metal phosphate 201. The organic resin 202 contains 5 or more parts by mass of amino resin per 100 parts by mass of the metal phosphate 201. Resultantly, the insulating coating film 20 exhibits excellent adhesion and corrosion resistance after stress relief annealing.

### [Manufacturing Method]

An example of a method of manufacturing the non-oriented electrical steel sheet 1 of the present embodiment will be described. The manufacturing method described below is an example for manufacturing the non-oriented electrical steel sheet 1. Therefore, the non-oriented electrical steel sheet 1 may be manufactured by other manufacturing methods other than the manufacturing method described below. However, the manufacturing method described below is a suitable example of a manufacturing method for non-oriented electrical steel sheet 1.

An example of the manufacturing method of the non-oriented electrical steel sheet 1 according to the present embodiment includes a coating process and a baking process. In the coating process, a surface treatment agent containing a metal phosphate 201 and an organic resin 202 is applied to the surface of the base steel sheet 10. In the baking process, the base steel sheet 10 coated with the surface treatment agent is heated to form an insulating coating film 20. Each process is described below.

### [Coating Process]

In the coating process, a surface treatment agent is applied to the surface of the base steel sheet 10. The coating method is not limited. Known coating methods can be applied. Examples of the coating method include a roll coater method, a spray method, and a dip method, etc.

### [Surface Treatment Agent]

The surface treatment agent contains a metal phosphate 201 and an organic resin 202. Here, the metal phosphate 201 and the organic resin 202 in the surface treatment agent are the same as the metal phosphate 201 and the organic resin 202 described above, respectively. When preparing a metal phosphate solution, it is preferable to mix at least one of an oxide, a carbonate, and a hydroxide of the metal ions with various phosphoric acids such as orthophosphoric acid.

### [Organic Resin Content in Surface Treatment Agent]

The contents of organic resin, amino resin, acrylic resin, polyester resin, and the other resins in the surface treatment agent are the same as the contents of organic resin 202, amino resin, acrylic resin, polyester resin, and the other resins in the insulating coating film 20. This is because the structure of the metal phosphate 201 and the organic resin 202 does not change and the content ratio is maintained even after the baking process described below as long as the baking conditions are appropriate. That is, the content of the organic resin 202 in the surface treatment agent is 5 to 35 parts by mass per 100 parts by mass of the metal phosphate 201. The content of the amino resin in the surface treatment agent is 5 parts by mass or more per 100 parts by mass of the metal phosphate 201. The same applies to preferred contents of the organic resin 202, the amino resin, the acrylic resin, the polyester resin and the other resins.

### [Baking Process]

In the baking process, the base steel sheet 10 coated with the surface treatment agent is heated to form an insulating coating film 20. The conditions for baking are a heat treatment temperature of 200 to 450°C and a heat treatment time of 10 to 120 seconds.

### Heat treatment temperature: 200 to 450°C

If the heat treatment temperature is less than 200°C, the dehydration reaction of the metal phosphate 201 does not proceed sufficiently. Therefore, the insulating coating film 20 cannot be properly formed. On the other hand, if the heat treatment temperature exceeds 450°C, the organic resin 202 is thermally decomposed. Therefore, the insulating coating film 20 cannot be properly formed. Therefore, the heat treatment temperature is 200 to 450°C. A preferred lower limit of the heat treatment temperature is 250°C, more preferably 280°C, and even more preferably 300°C. A preferred upper limit of the heat treatment temperature is 430°C, more preferably 400°C, even more preferably 380°C, even more preferably 350°C, and even more preferably 320°C.

### Heat treatment time: 10 to 120 seconds

If the heat treatment time is less than 10 seconds, the condensation reaction of the metal phosphate 201 does not proceed sufficiently. Therefore, the insulating coating film 20 cannot be formed properly. On the other hand, if the heat treatment time exceeds 120 seconds, the organic resin 202 may melt due to excessive heating. In addition, if the heat treatment time exceeds 120 seconds, the organic resin 202 may thermally decompose, causing the insulating coating film 20 to become powdery. Therefore, the heat treatment time is 10 to 120 seconds. A preferred lower limit of the heat treatment time is 15 seconds, more preferably 20 seconds, even more preferably 25 seconds, and even more preferably 30 seconds. A preferred upper limit of the heat treatment time is 100 seconds, more preferably 90 seconds, even more preferably 80 seconds, even more preferably 70 seconds, and even more preferably 60 seconds.

The surface treatment agent contains a metal phosphate 201 and 5 to 35 parts by mass of an organic resin 202 per 100 parts by mass of the metal phosphate 201. The organic resin 202 contains 5 or more parts by mass of amino resin per 100 parts by mass of the metal phosphate 201. By appropriately adjusting this surface treatment agent within the range of the baking conditions described above and heat treating it, the insulating coating film 20 can be formed.

Through the above manufacturing process, the non-oriented electrical steel sheet 1 is manufactured.

### EXAMPLE

Examples will be used to further illustrate the effects of the non-oriented electrical steel sheet according to the present embodiment. The conditions in the following examples are examples of conditions adopted to confirm the feasibility and effectiveness of the non-oriented electrical steel sheet of the present embodiment. Therefore, the non-oriented electrical steel sheet of the present embodiment is not limited to this one condition example.

A base metal steel sheet (non-oriented electrical steel sheet) with a thickness of 0.25 mm was prepared. The base steel sheet contained by mass Si: 3.1%, Al: 0.6%, Mn: 0.2%, and the balance being Fe and impurities. The coating process was performed on the prepared base metal steel sheet. Specifically, the surface treatment agents with the components shown in Table 1 were applied to the surface of the base metal steel sheet using a rubber roll type coating device.

### [Table 1]

**Table 1**

| Test No. | Metal phosphates (100 parts by mass) | Amino resin | | Acrylic resin/ polyester resin | | Organic resin | Ratio of contents of amino resin to organic resin | Others | |
|---|---|---|---|---|---|---|---|---|---|
| | | Type | Content (parts by mass) | Type | Content (parts by mass) | Total content (parts by mass) | % | Type | Content (parts by mass) |
| 1 | Al phosphate | A | 5 | F | 20 | 25 | 20 | | |
| 2 | Al phosphate | B | 10 | F | 15 | 25 | 40 | | |
| 3 | Al phosphate: 5+Mg phosphate: 5 | A | 28 | G | 1 | 29 | 97 | | |
| 4 | Al phosphate: 9+Mo phosphate: 1 | B | 10 | H | 10 | 20 | 50 | | |
| 5 | Al phosphate: 3+Zn phosphate: 7 | C | 20 | I | 10 | 30 | 67 | | |
| 6 | Al phosphate: 8+Mn phosphate: 2 | D | 8 | I | 15 | 23 | 35 | | |
| 7 | Al phosphate: 3+Zn phosphate: 7 | E | 10 | G | 18 | 28 | 36 | | |
| 8 | Al phosphate | A | 5 | F + H | 5+5 | 15 | 33 | | |
| 9 | Al phosphate: 5+Mg phosphate: 5 | B | 10 | I | 0.3 | 10.3 | 97 | | |
| 10 | Al phosphate | B | 10 | | 0 | 10 | 100 | | |
| 11 | Mg phosphate: 8+Mn phosphate: 2 | | 0 | H | 20 | 20 | 0 | | |
| 12 | Al phosphate | | 0 | H + J | 10 + 10 | 20 | 0 | | |
| 13 | Mg phosphate: 8+Mn phosphate: 2 | B | 0.3 | H | 10 | 10.3 | 3 | | |
| 14 | Al phosphate | B | 35 | I | 10 | 45 | 78 | | |
| 15 | Al phosphate | B | 10 | F | 30 | 40 | 25 | | |
| 16 | Al phosphate | B | 10 | F | 10 | 20 | 50 | Boric acid | 2 |
| 17 | Al phosphate | B | 10 | F | 15 | 25 | 40 | 20wt% colloidal silica | 40 |

The "Metal phosphates (100 parts by mass)" column in Table 1 indicates the type of metal phosphate contained in the surface treatment agent and the mass ratio in the metal phosphate. For example, in test number 1, the metal phosphate consists of Al phosphate. In test number 3, the metal phosphate consists of Al phosphate and Mg phosphate in a ratio of 5:5 by mass. In test number 4, the metal phosphate contains Al phosphate and Mo phosphate in a ratio of 9:1 by mass. The "Content" in the "Amino resin" column in Table 1 indicates the parts by mass of the amino resin relative to 100 parts by mass of the metal phosphate. The "Content" in the "Acrylic resin/polyester resin" column in Table 1 indicates the parts by mass of acrylic resin or polyester resin relative to 100 parts by mass of the metal phosphate. For example, test number 8 contains 5 parts by mass of (F) acrylic resin emulsion copolymerized from methacrylic acid, methyl acrylate and vinyl acetate, and 5 parts by mass of (H) hydroxyl-containing polyester resin.

Types A to E in the "Amino resin" column in Table 1 are as follows.
(A) Butyl etherified melamine resin (number average molecular weight 2000)
(B) Methyl etherified melamine resin (number average molecular weight 1000)
(C) Benzoguanamine resin (number average molecular weight 3000)
(D) Methylated melamine-methylguanamine mixed resin (number average molecular weight 8000)
(E) Dibutoxymethyl trimethyl etherified melamine resin (number average molecular weight 6000)

Types F to J in the "Acrylic resin/polyester resin" column in Table 1 are as follows. Note that "water-soluble resol-type phenolic resin" in J is one of the other resins that do not belong to either acrylic resin or polyester resin, but is listed together in the "Acrylic resin/polyester resin" column.
(F) Acrylic resin emulsion obtained by copolymerizing methacrylic acid, methyl acrylate, and vinyl acetate
(G) Acrylic resin emulsion obtained by copolymerizing styrene, acrylic acid, and methacrylic acid
(H) Hydroxyl group-containing polyester resin (number average molecular weight 8,000, hydroxyl value 40 mg KOH/g)
(I) Hydroxyl group-containing polyester resin (number average molecular weight 15,000, hydroxyl value 80 mg KOH/g)
(J) Water-soluble resol-type phenolic resin

An aqueous solution containing 50 mass% of the resins shown in (A) to (J) above was obtained using an emulsifier. The aqueous solution of the resins was mixed with a 30 mass% metal phosphate solution to prepare the composition of each test number in Table 1. A viscosity modifier, an antioxidant, and a solvent (ethyl alcohol, isopropyl alcohol, or ethylene glycol monobutyl ether) in a content of 5% or less relative to the total mass were added to the obtained aqueous solution to obtain a 30% by mass aqueous solution.

The surface treatment agent of each test number was applied to the surface of the base steel sheet so that the amount applied was 0.8 g/m². The base steel sheet coated with the surface treatment agent was subjected to baking. For each test number, the heat treatment temperature was 300°C, and the heat treatment time was 60 seconds. By the above process, a non-oriented electrical steel sheet with an insulating coating film formed on the surface of the base steel sheet was manufactured.

### [Component Analysis of Insulating coating film]

Component analysis of the insulating coating film was performed on the obtained non-oriented electrical steel sheet. Specifically, chemical analysis using SEM-EDS was performed on the insulating coating film to determine the content of P and metal elements. P was then converted to phosphoric acid of H₂PO₄, and its content was calculated. The content of the metal phosphate, which is considered as M(H₂PO₄)ₓ (where M is the metal element, x is the valence of the metal element), was calculated from the calculated contents of metal element and phosphoric acid.

Then, the type of organic resin was identified by GC/MS and FT-IR methods, and if a plurality of types of organic resins were present, their proportions were determined. The carbon content of each organic resin was calculated from the chemical structure of identified organic resin. When a plurality of types of organic resins were included, the average carbon content was calculated according to the ratio of the organic resins. Then, elemental analysis using SEM-EDS was performed at each of the five locations on the surface of the insulating coating film to measure the carbon concentration, and the carbon concentration of the insulating coating film was determined by arithmetically averaging the five measured values.

The weight of the insulating coating film removed from the base steel sheet using an alkaline solution was then determined. From the weight of the insulating coating film and the carbon concentration of the insulating coating film, the absolute value of the carbon amount in the insulating coating film was calculated. The content of each organic resin in the insulating coating film was calculated by comparing the absolute carbon amount in the insulating coating film with the carbon content of the organic resin.

In addition, the content of boric acid was measured by ICP-AES, and the content of colloidal silica was measured by SEM-EDS. Then, the parts by mass of each component to 100 parts by mass of the metal phosphate was determined. by comparing the content of each measured component with the content of the metal phosphate measured by the method described above.

These results are shown in Table 2. As can be seen from Table 2, the measured content of each component was almost identical to that in the treatment agent shown in Table 1

### [Table 2]

**Table 2**

| Test No. | Type and ratio of metal phosphates | Phosphate | Content of phosphorus | Amino resin | | | Acrylic resin/ polyester resin | | | Others | | |
|---|---|---|---|---|---|---|---|---|---|---|---|---|
| | | Content (mass%) | (mass%, in terms of H₂PO₄) | Type | Content (mass%) | Content (parts by mass) | Type and ratio | Content (mass%) | Content (parts by mass) | Type | Content (mass%) | Content (parts by mass) |
| 1 | Al phosphate | 80 | 73 | A | 4 | 5 | F | 16 | 20 | | | |
| 2 | Al phosphate | 80 | 73 | B | 8 | 10 | F | 12 | 15 | | | |
| 3 | Al phosphate: 5+Mg phosphate: 5 | 78 | 70 | A | 22 | 28 | G | 1 | 1 | | | |
| 4 | Al phosphate: 9+Mo phosphate: 1 | 83 | 75 | B | 8 | 10 | H | 8 | 10 | | | |
| 5 | Al phosphate: 3+Zn phosphate: 7 | 77 | 61 | C | 15 | 19 | I | 8 | 10 | | | |
| 6 | Al phosphate: 8+Mn phosphate: 2 | 81 | 72 | D | 7 | 9 | I | 12 | 15 | | | |
| 7 | Al phosphate: 3+Zn phosphate: 7 | 78 | 62 | E | 8 | 10 | G | 14 | 18 | | | |
| 8 | Al phosphate | 87 | 80 | A | 4 | 5 | F:5 + H:5 | 9 | 10 | | | |
| 9 | Al phosphate: 5+Mg phosphate: 5 | 91 | 82 | B | 9 | 10 | I | 0.3 | 0.3 | | | |
| 10 | A1 phosphate | 91 | 83 | B | 9 | 10 | | 0 | 0 | | | |
| 11 | Mg phosphate: 8+Mn phosphate: 2 | 83 | 72 | | 0 | 0 | H | 17 | 20 | | | |
| 12 | Al phosphate | 83 | 76 | | 0 | 0 | H:5 + J:5 | 17 | 20 | | | |
| 13 | Mg phosphate: 8+Mn phosphate: 2 | 91 | 79 | B | 0.3 | 0.3 | H | 9 | 10 | | | |
| 14 | Al phosphate | 69 | 63 | B | 24 | 35 | I | 7 | 10 | | | |
| 15 | Al phosphate | 71 | 65 | B | 7 | 10 | F | 21 | 30 | | | |
| 16 | A1 phosphate | 82 | 75 | B | 8 | 10 | F | 8 | 10 | Boric acid | 2 | 2 |
| 17 | Al phosphate | 75 | 69 | B | 8 | 11 | F | 11 | 15 | Colloidal silica | 6 | 8 |

### [Evaluation Test 1]

A powdering evaluation test, an insulation evaluation test, a corrosion resistance evaluation test, and an elution resistance evaluation test were conducted on the manufactured non-oriented electrical steel sheets.

### [Powdering Evaluation Test]

A test specimen of 60 mm wide and 100 mm long was taken from the non-oriented electrical steel sheet of each test number. A flat indenter (steel plate) 30 mm wide and 10 mm long was slid 10 times back and forth on the insulating coating film of the test specimen. The load on the flat indenter during sliding was 500 gf and the sliding distance was 5 cm. The insulating coating film and the flat indenter were visually observed after sliding, and the powdering situation was evaluated as follows. The obtained powdering rating is shown in Table 3 in the "Properties before stress relief annealing: Powdering" column.
A: No sliding mark or peeling is observed on the insulating coating film surface, and no insulating coating film powder adheres to the flat indenter (the area ratio of the flat indenter surface with powder adhesion is 0%).
B: No sliding mark or peeling is observed on the insulating coating film surface, but a small amount of insulating coating film powder adheres to the flat indenter (the area ratio of the flat indenter surface with powder adhesion is more than 0% and less than 1%).
C: Streaky sliding marks are observed on the surface of the insulating coating film, and a small amount of powder from the insulating coating film adheres to the flat indenter (the area ratio of the flat indenter surface with powder adhesion is 1% or more and less than 3%).
D: Peeling marks are observed on some parts of the insulating coating film, and a large amount of the insulating coating film powder adheres to the flat indenter (the area ratio of the flat indenter surface with powder adhesion is 3% or more and less than 5%).
E: Peeling marks are observed on almost the entire surface of the insulating coating film, and a large amount of insulating coating film powder adheres to the flat indenter (the area ratio of the flat indenter surface with powder adhesion is 5% or more).

### [Table 3]

**Table 3**

| Test No. | Properties before stress relief annealing | | | | Properties after stress relief annealing | | |
|---|---|---|---|---|---|---|---|
| | Powdering | Insulation property | Corrosion resistance | Elution resistance | Adhesion | Corrosion resistance | |
| 1 | A | A | 8 | 33 | A | 9 | Inventive example |
| 2 | B | A | 10 | 102 | B | 9 | Inventive example |
| 3 | B | B | 8 | 67 | A | 7 | Inventive example |
| 4 | B | B | 9 | 41 | B | 8 | Inventive example |
| 5 | B | B | 7 | 67 | B | 5 | Inventive example |
| 6 | B | B | 8 | 98 | B | 8 | Inventive example |
| 7 | A | A | 8 | 89 | B | 6 | Inventive example |
| 8 | B | B | 8 | 74 | A | 7 | Inventive example |
| 9 | C | B | 4 | 154 | C | 4 | Inventive example |
| 10 | B | B | 5 | 167 | C | 5 | Inventive example |
| 11 | B | C | 7 | 109 | C | 2 | Comparative example |
| 12 | B | C | 6 | 121 | C | 2 | Comparative example |
| 13 | B | C | 6 | 96 | D | 3 | Comparative example |
| 14 | B | B | 4 | 195 | E | 4 | Comparative example |
| 15 | C | B | 8 | 156 | D | 2 | Comparative example |
| 16 | C | B | 5 | 217 | C | 4 | Inventive example |
| 17 | C | B | 7 | 60 | C | 4 | Inventive example |

### [Insulation Property Evaluation Test]

The insulation property of each test number of the non-oriented electrical steel sheet was evaluated by the following method. The interlaminar resistance of each test number of the non-oriented electrical steel sheets was measured according to JIS C2550-4:2019. Based on the obtained interlaminar resistance values, the insulation property was evaluated as follows. The obtained insulation property ratings are shown in the "Properties before stress relief annealing: Insulation property" column of Table 3.

A: Interlayer resistance is 30 Ω·cm²/sheet or more
B: Interlayer resistance is 10 Ω·cm²/sheet or more and less than 30 Ω·cm²/sheet
C: Interlayer resistance is 3 Ω·cm²/sheet or more and less than 10 Ω·cm²/sheet
D: Interlayer resistance is less than 3 Ω·cm²/sheet

### [Corrosion Resistance Evaluation Test]

The corrosion resistance of the non-oriented electrical steel sheet of each test number was evaluated by the following method. A test specimen of 30 mm in width and 300 mm in length was taken from the non-oriented electrical steel sheet of each test number. A 5% NaCl solution was sprayed on the test specimen for 7 hours in an atmosphere of 35°C according to the salt spray test described in JIS Z23 71:2015. Then, the area ratio of the area on the surface of the test specimen where rust was formed (hereinafter referred to as "rust area ratio") was determined. The corrosion resistance was rated according to the obtained rust area ratio using the following 10-point scale. The obtained corrosion resistance is shown in the "Properties before stress relief annealing: Corrosion resistance" column of Table 3.

10: Rust area ratio is 0%.
9: Rust area ratio is 0.10% or less
8: Rust area ratio is more than 0.10% and 0.25% or less
7: Rust area ratio is more than 0.25% and 0.50% or less
6: Rust area ratio is more than 0.50% and 1.00% or less
5: Rust area ratio is more than 1.00% and 2.50% or less
4: Rust area ratio is more than 2.50% and 5.00% or less.
3: Rust area ratio is more than 5.00% and 10.00% or less
2: Rust area ratio is more than 10.00% and 25.00% or less
1: Rust area ratio is more than 25.00% and 50.00% or less

### [Elution Resistance Evaluation Test]

The elution resistance was evaluated for each test number of the non-oriented electrical steel sheets by the following method. A test specimen 30 mm wide and 300 mm long was taken from the non-oriented electrical steel sheet of each test number. The test specimen was boiled in boiling pure water for 10 minutes. The amount of phosphoric acid eluted into the pure water (solution) after boiling was measured. Specifically, the pure water (solution) was cooled after boiling. The solution was diluted with pure water, and the concentration of phosphoric acid in the solution was measured by ICP-AES. The amount of eluted phosphoric acid (mg/m²) was determined from the dilution rate. The results are shown in the "Properties before stress relief annealing: Elution resistance" column of Table 3.

### [Evaluation Test 2]

Stress relief annealing was performed on the non-oriented electrical steel sheet of each test number. A test specimen 30 mm wide and 300 mm long was taken from the non-oriented electrical steel sheet of each test number. The test specimen was subjected to stress relief annealing. The stress relief annealing was performed in a nitrogen stream at an annealing temperature of 800°C and an annealing time of 2 hours. An adhesion evaluation test and a corrosion resistance evaluation test were performed on the test specimen after the stress relief annealing.

### [Adhesion Evaluation Test]

The adhesion was evaluated for each test number of the non-oriented electrical steel sheets by the following method. After stress relief annealing, an adhesive tape was applied to the insulating coating film on the test specimen. The test specimen with the adhesive tape applied was wrapped around a 10 mm diameter metal bar with the longitudinal direction of the test specimen parallel to the axial direction of the metal bar and the adhesive tape facing inward. In other words, the test specimen was given a 10 mm diameter bend. The test specimen was then removed from the metal bar. The adhesive tape was removed from the test specimen, and the percentage of the insulating coating film remaining without peeling off from the base steel sheet (area ratio) was measured. Based on the obtained area ratio, the adhesion was evaluated as follows.

A: The area ratio of the remaining insulating coating film was 100%. In other words, the insulating coating film did not peel off
B: The area ratio of the remaining insulating coating film was 90% or more and less than 100%
C: The area ratio of the remaining insulating coating film was 50% or more and less than 90%
D: The area ratio of the remaining insulating coating film was 30% or more and less than 50%
E: The area ratio of remaining insulating coating film was less than 30%

The obtained adhesion ratings are shown in the "Properties after stress relief annealing: Adhesion" column of Table 3. Evaluations A, B, and C were considered acceptable

### [Corrosion Resistance Evaluation Test]

The corrosion resistance of each test number of the non-oriented electrical steel sheets was evaluated by the following method. The test specimen of each test number after stress relief annealing was subjected to a constant temperature and humidity test according to the method described in JIS C60068-2-30, in which the test specimens were kept in a temperature range from 25°C to 40°C, with cycles between a dew point of 90 to 95% and a dew point of 95 to 100% for 240 hours. Then, the area ratio of the surface of the test specimen in which rust was formed (hereinafter referred to as the rust area ratio) was determined. The corrosion resistance was evaluated according to the obtained rust area ratio using the following 10-point scale.

10: Rust area ratio is 0%
9: Rust area ratio is 0.10% or less
8: Rust area ratio is more than 0.10% and 0.25% or less
7: Rust area ratio is more than 0.25% and 0.50% or less
6: Rust area ratio is more than 0.50% and 1.00% or less
5: Rust area ratio is more than 1.00% and 2.50% or less
4: Rust area ratio is more than 2.50% and 5.00% or less
3: Rust area ratio is more than 5.00% and 10.00% or less
2: Rust area ratio is more than 10.00% and 25.00% or less
1: Rust area ratio is more than 25.00% and 50.00% or less

The obtained corrosion resistance is shown in the "Properties after stress relief annealing: Corrosion resistance" column of Table 3. A score of 4 or higher was considered acceptable

### [Evaluation Results]

The evaluation results are shown in Table 3. Referring to Tables 1 to 3, the insulating coating films of Test Nos. 1 to 10, 16, and 17 contained a metal phosphate and an organic resin. The organic resin content of the insulating coating films of Test Nos. 1 to 10, 16, and 17 ranged from 5 to 35 parts by mass per 100 parts by mass of the metal phosphate. The organic resin contained 5 parts by mass or more of amino resin per 100 parts by mass of the metal phosphate in these coatings. As a result, the insulating coating films of Test Nos. 1 to 10, 16 and 17 exhibited excellent adhesion and corrosion resistance after stress relief annealing.

Compared with the insulating coating film of Test No. 10, which did not contain acrylic resin or polyester resin, the insulating coating films of Test Nos. 1 to 9, which contained one or more selected from the group consisting of an acrylic resin and a polyester resin, had excellent elution resistance before stress relief annealing.

Compared with the insulating coating films of Test Nos. 9 and 10, in which the content of acrylic resin and polyester resin was less than 1 part by mass per 100 parts by mass of the metal phosphate, the insulating coating films of Test Nos. 1 to 8, in which the content of acrylic resin and polyester resin was 1 part or more per 100 parts by mass of the metal phosphate, had even better adhesion after stress relief annealing.

Test Nos. 16 and 17 contained boric acid and colloidal silica, respectively. As a result, the adhesion and corrosion resistance after stress relief annealing were slightly inferior to the insulating coating films of Test Nos. 1 to 8.

On the other hand, Test Nos. 11 to 13 contained too little amino resin. As a result, it was not possible to improve the corrosion resistance after stress relief annealing.

In Test Nos. 14 and 15, the content of the organic resin was too high. As a result, it was not possible to improve the adhesion after stress relief annealing.

The above is a description of the embodiments of the present disclosure. However, the above-described embodiments are merely examples of implementing the present disclosure. Therefore, the present disclosure is not limited to the above-described embodiments, and may be implemented by modifying the above-described embodiments, as appropriate, within the scope that does not depart from the intent thereof.

### REFERENCE SIGNS LIST

1 Non-oriented electrical steel sheet
10 Base metal steel sheet
20 Insulating coating film
201 Metal phosphate
202 Organic resin

## Claims

1. A non-oriented electrical steel sheet comprising:
a base metal steel sheet; and
an insulating coating film formed on a surface of the base metal steel sheet,
wherein the insulating coating film contains a metal phosphate and 5 to 35 parts by mass of an organic resin per 100 parts by mass of the metal phosphate,
wherein the organic resin contains 5 parts by mass or more of an amino resin per 100 parts by mass of the metal phosphate.

2. The non-oriented electrical steel sheet according to claim 1,
wherein the organic resin further contains one or more types selected from an acrylic resin and a polyester resin.

3. The non-oriented electrical steel sheet according to claim 2,
wherein the organic resin contains 5 to 30 parts by mass of the amino resin per 100 parts by mass of the metal phosphate, and one or more types selected from an acrylic resin and a polyester resin in a total of 1 to 25 parts by mass per 100 parts by mass of the metal phosphate.

4. The non-oriented electrical sheet according to any one of claims 1 to 3,
wherein the metal phosphate is one or more types selected from Zn phosphate, Mn phosphate, Al phosphate, and Mo phosphate.

5. The non-oriented electrical sheet according to any one of claims 1 to 4,
wherein the amino resin is one or more types selected from a melamine resin and a benzoguanamine resin.

6. The non-oriented electrical sheet according to any one of claims 1 to 5,
wherein the base metal steel sheet contains, by mass percentage, Si: 2.5 to 4.5%, Al: 0.1 to 1.5%, and Mn: 0.2 to 4.0%.
